# EUROPEAN PATENT SPECIFICATION

(11) **EP 2 276 862 B1**
(45) Date of publication and mention of the grant of the patent: **20.12.2023**
(21) Application number: 09731512.1
(22) Date of filing: 16.04.2009
(51) Int. Cl.: C14C 15/00, B05C 15/00, B05C 13/02, D06B 1/02, B05B 16/00, B05B 14/43, B05B 14/44, A43D 11/00, A43B 7/12

(54) **METHOD AND APPARATUS FOR IMPREGNATION OF ITEMS**
VERFAHREN UND VORRICHTUNG ZUR IMPRÄGNIERUNG VON GEGENSTÄNDEN
PROCÉDÉ ET APPAREIL DESTINÉS À IMPRÉGNER DES ARTICLES

(30) Priority: 16.04.2008 DK 200800557
(43) Date of publication of application: 26.01.2011
(73) Proprietor: Imbox Protection A/S, 8250 Egå (DK)
(72) Inventor: PARLING, Peter, DK-7400 Herning (DK)
(74) Representative: Patrade A/S
(86) International application number: PCT/DK2009/050088
(87) International publication number: WO 2009/127214

(56) References cited:
- EP-A2- 1 332 802
- EP-A2- 1 586 362
- DE-A1- 19 945 229
- DE-U1- 29 712 707
- ES-A6- 2 005 932
- ES-A6- 2 014 544
- FR-A1- 2 666 522
- GB-A- 379 785
- GB-A- 406 348
- GB-A- 2 098 885
- GB-A- 2 125 319
- US-A- 5 884 418
- US-A1- 2007 092 657
- US-B1- 6 792 147
- DATABASE WPI Week 199551, Derwent Publications Ltd., London, GB; AN 1995-399587, XP003025569 & JP 7 275 589 A (NAIGAI TOKUSHU SENKO KK) 24 October 1995

## Description

### Field of the Invention

The present invention concerns a method for impregnating footwear, bags, gloves, other leather items or leather-like items, and of the kind as specified in claim 1.

The invention also concerns an apparatus for performing the method according to claim 5.

### Background of the Invention

When buying footwear and other leather items it has almost become common also to buy a spray can with a suitable impregnating agent. In the purchasing situation, it is not always remembered if a corresponding impregnating agent is already present at home, often resulting in a wrong purchase such that in many homes a number of spray cans with greater or lesser content of impregnating agent accumulate.

Such stores of spray cans with impregnating contents may in practice imply a serious environmental problem because the spray cans cannot be discarded together with refuse collection but have to be handed in to recycling stations.

Besides, the use of spray cans with impregnating agent or, for that matter, other contents implies an unfavourable environmental load due to the propellant which is released to the atmosphere through the use thereof.

Thus it is expected that within a measurable time, a ban will be imposed on the use of spray cans containing a mixture of harmful propellant and i.a. impregnating agents.

GB 2 098 885 A discloses a spray booth comprising spray nozzles mounted on a turntable.

EP1586362 A2 discloses a spraying machine for tannery hides. A spraying zone is provided inside which a number of nozzles are arranged. A housing is provided in order to protect the ambient environment from the spray agents. The housing has openings allowing a continuous conveyor belt to extend from outside the housing on one side through the housing and out on the other side of the housing. Permanent openings are provided where the conveyor belt enters and exits the housing. The openings allow the hides to enter and exit the treatment zone. After the product has been sprayed in the treatment zone, the hide is transported to subsequent steps of drying and storage.

DE 199 45 229 A1 discloses a method for surface treatment for items which consists of a spraying action carried out between doors in an impregnationstation, after which the item to be treated is transported further through the apparatus into a drying cubicle. The disclosed treatment thus requires a drying step and that the itemsto be treated are transported linearly through both the impregnating station and further on through the drying station.

### Object of the Invention

On this background, it is the purpose of the invention to indicate a method and an apparatus of the kind indicated in the introduction, and which by means of simple technical measures enables elimination of the above mentioned drawbacks by surface treatment or impregnation of the items mentioned in the introduction, e.g. footwear.

### Description of the Invention

A method for impregnation of footwear, bags, gloves, other leather items or leather-like items by a surface treatment comprising the following method steps: possible covering a surface or a part of items not to be treated; possible selecting time of operation of a spraying unit; placing items to be treated in a cubicle; shutting said cubicle and thereby manually or automatically initiating the following further method steps; activating said spraying unit for forming a mist of impregnating agent inside said cubicle for applying impregnating agent onto the surfaces of the items; activating an air pump, ventilator or corresponding means for removal of excess impregnating agent from said cubicle; retaining excess impregnating agent in a filter, preferably a filter containing activated carbon.

In a simple way and by means of simple technical measures it hereby become possible to eliminate the above mentioned drawbacks that otherwise occur in connection with impregnation of footwear and other leather items by a surface treatment.

As an alternative to the usual home impregnation of footwear, according to the invention it hereby becomes possible already, for example, in the shoe shop to provide for an optimal impregnation in the form of spraying footwear with specific impregnation agent.

According to the invention the method may comprise the following further process step: selecting an impregnating agent; adjusting nozzles of said spraying unit in dependence of size and shape of actual items;

With the object of also treating items that cannot stand in the cubicle by themselves, the method according to the invention may advantageously include the following additional method steps: suspending items to be surface treated and which cannot stand by themselves in the cubicle; and/or supporting items with large height, such as boots, in upright position, e.g. by means of internal supports in the bootlegs.

The invention also concerns an apparatus for impregnating items according to the method of claim 1, comprising a closed cubicle, one or more storage containers for specific impregnating agents, said storage containers being connected with an electric pump via a valve system comprising one or more valves, characterised in that said pump being connected with one or more atomising nozzles in said cubicle, a control with associated keyboard which is accessible from a front side of the apparatus, said control being adapted to activate said pump and said valve system for connecting it with a storage container containing a specific impregnating agent, a filter and an air pump, ventilator or corresponding means provided and adapted to establish a vacuum in said cubicle for removal of residual impregnating agent from said cubicle and to retain said residue in said filter.

With the object of optimising the surface treatment and minimising use of impregnating agent, the apparatus according to the invention may be designed such that it includes a scanner, a camera or other means adapted to determine the shape and size of items disposed in the cubicle and which, coordinated by the control, are adapted to activate specific atomising nozzles.

The apparatus according to the invention it moreover designed such that it includes means adapted to support elongated items, by way of example high boots, upright or hanging in the cubicle.

Advantageously, the apparatus according to the invention may be designed such that it includes a drawer arranged under the cubicle, the drawer preferably being accessible from the front side of the apparatus and containing the filter and possibly also the storage containers for impregnating agent.

With the object of facilitating access from the spraying cubicle, it may be advantageous to design the apparatus according to the invention in such a way that the cubicle includes a sliding door arranged for opening by upward displacement and which includes a preferably electric actuating mechanism.

### Description of the Drawing

The invention is now explained in detail in connection with the drawing, in which:
- Fig. 1: shows a plan view of an embodiment of an apparatus according to the invention, as seen from the front side thereof;
- Fig. 2: shows a plan view of the apparatus, cf. Fig. 1, as seen from the right side;
- Fig. 3: shows a plan view of the apparatus, cf. Fig. 1, as seen from the front and with open cubicle;
- Fig. 4: shows a plan view of the apparatus, cf. Fig. 1, as seen from the left side;
- Fig. 5: shows a plan view of the apparatus, cf. Fig. 1, as seen from above;
- Fig. 6: shows a plan view of the apparatus, cf. Fig. 2, shown with an open drawer;
- Fig. 7: shows a plan view of a second embodiment of an apparatus according to the invention, as seen from the front side thereof;
- Fig. 8: shows a plan view of the apparatus, cf. Fig. 1, provided with legs;
- Fig. 9: shows a plan view of the apparatus, cf. Fig. 2, provided with legs; and
- Fig. 10: shows a perspective "transparent" view of a preferred embodiment of an apparatus according to the invention, as seen obliquely from behind;
- Fig. 11: shows a plan view of the apparatus, cf. Fig. 10, as seen from the side;
- Fig. 12: shows a perspective view corresponding to Fig. 10, shown with an upper drawer in open position for inserting items to be impregnated;
- Fig. 13: shows a plan view corresponding to Fig. 12; and
- Fig. 14: shows a simplified perspective view of the preferred apparatus according to the invention shown in Figs. 10-13.

### Detailed Description of the Invention

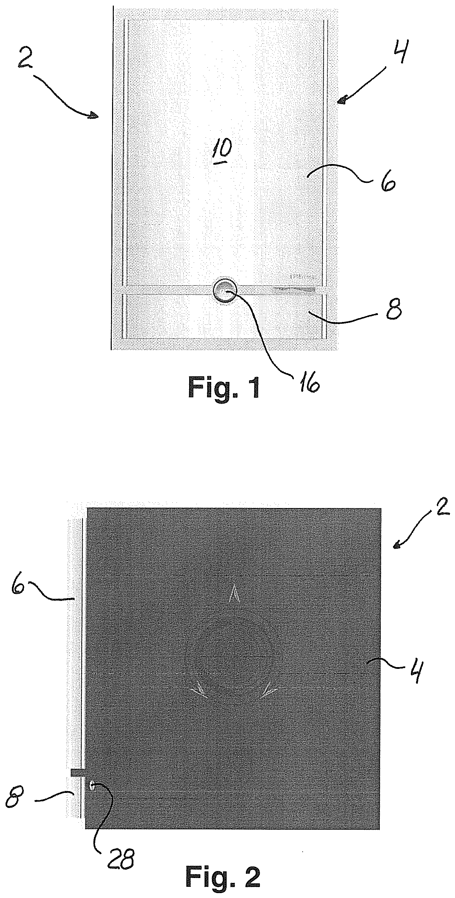

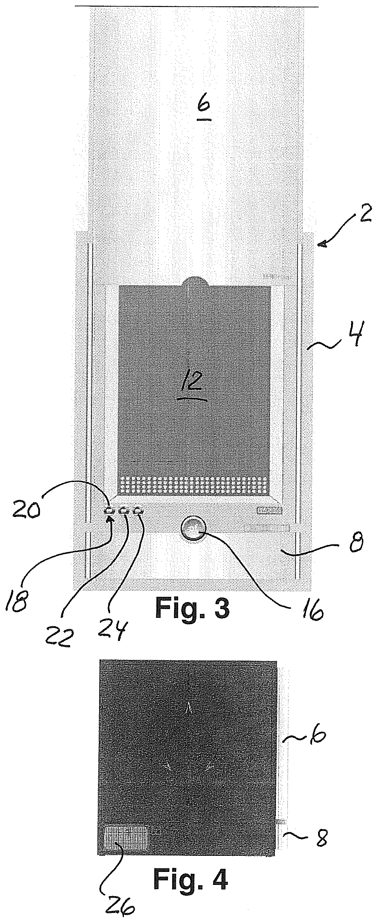

The apparatus 2 shown in Figs. 1-6 is designed as a generally box-shaped cabinet 4 with a front door in the form of a sliding door 6 (Fig. 3) and with a lower drawer 8 with a front 10. The cabinet 4 includes an internal spraying cubicle 12 with a plane bottom plate 14 upon which items to be surface treated can be supported.

When the sliding door 6 is opened, as shown in Fig. 3, by an operating button 16, a display 18 with by way of example three pushbuttons 20-24 becomes accessible for selecting a specific impregnating agent.

After preselection by pressing one of the pushbuttons 20-24, the sliding door 6 is closed and the apparatus 2 is started by renewed pressing on the operating button 16, or the impregnation treatment is initiated as soon as the sliding door 6 has been closed. During operation of the apparatus 2, the operating button 16 will preferably be lit and inactive, so as to be inoperative to pressure action.

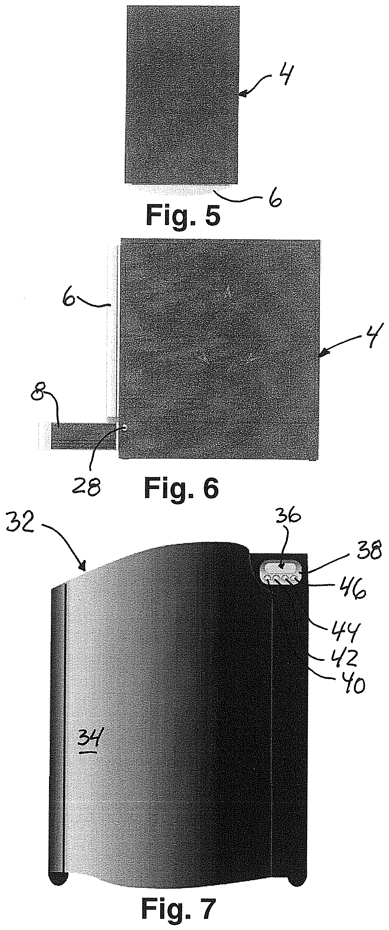

At the end of impregnation treatment, the time period of which can be fixedly preselected or adjustable, an air pump, ventilator or similar means integrated in the bottom of the cabinet 4, preferably behind the drawer 8, will automatically start with the object of establishing a vacuum in the spraying cubicle 12, such that residual impregnating agent is exhausted through a filter, preferably a filter containing activated carbon which is by way of example incorporated in the drawer 8. This has preferably a less depth than the depth of the cabinet 4, which i.a. appears from Figs. 4 and 6, where Fig. 4 further shows an exhaust opening 26 of the air pump, ventilator or the like disposed behind the drawer 8.

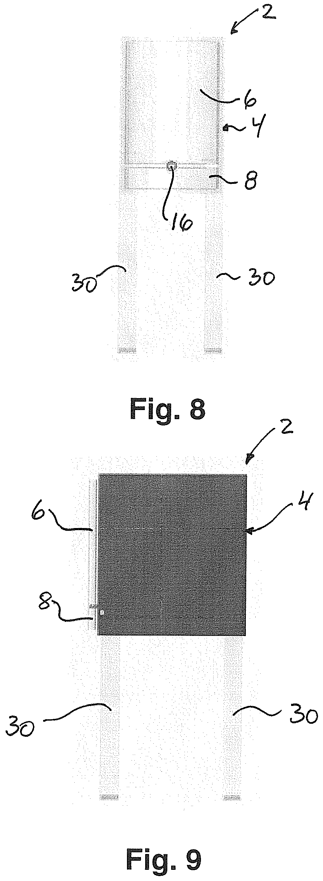

The drawer 8 may, as indicated, also have space for by way of example three storage containers for impregnating agent. As shown additionally in figs. 2, 6 and 8, the drawer 8 is provided with a key operated lock 28 as the drawer 8 is normally only to be opened by certified personnel. Figs. 8 and 9 shows that the apparatus 2 may suitably be provided with legs 30 such that the cabinet 4 can be disposed at a working level which is comfortable for the staff.

In Fig. 7 is shown an alternative embodiment of an apparatus 32 which includes a left-hinged pivoting door 34 and a display 36 with associated operating panel 38 with pushbuttons 40-46.

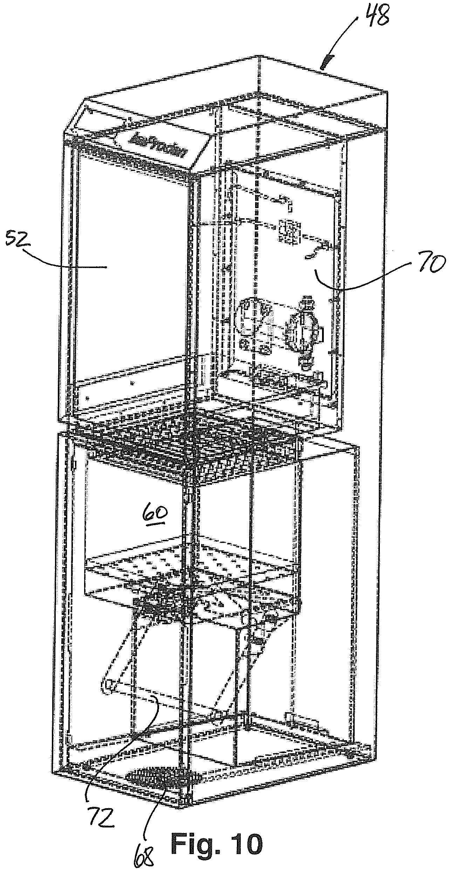

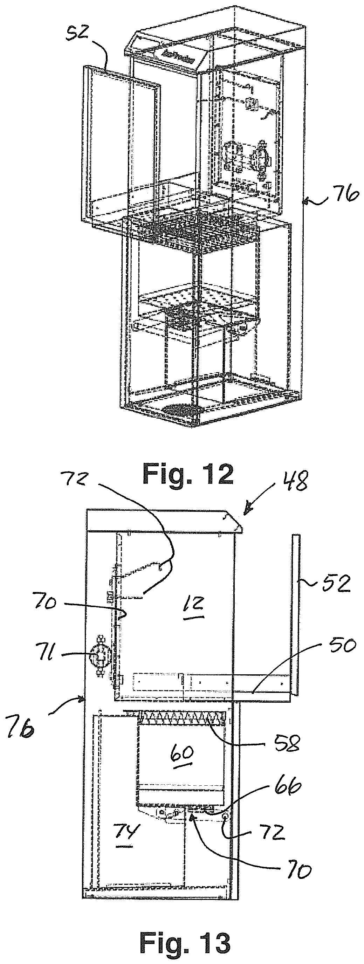

Figs. 10-14 show a preferred embodiment of an apparatus 48 where a bottom plate 50 and an upper front door 52 of the spraying cubicle 12 are arranged sliding like a drawer 54 which, as shown in Figs. 12 and 13, can be drawn out for making space for lateral insertion of items in the spraying cubicle 12. The bottom plate 50 is made of a perforated plate 56 forming connection via an upper pleated drop filter 58 for a cubic filter cassette 60 which is preferably filled with activated carbon, and which is disposed immediately under the spraying cubicle 12 in a compartment 62 to which there is access through a lower front door 64.

In the compartment 64 immediately under the filter box 60, a ventilator 66 is placed, providing exhaust of excess impregnating liquid through the filter cassette 60, and which furthermore communicates with the surroundings through a lower ventilation opening 68 at the bottom of the apparatus 48.

When the filter cassette 60 which contains the upper drop filter 58 - after impregnating about 6,600 pairs of shoes and consuming 37-42 litres of impregnation liquid - is to be replaced, the lower front door 64 is opened, after which the filter cassette 60 for removal is adapted to be moved downwards by means of a pivot arm mechanism 70 via a transverse operating handle 73, such that the used filter cassette 60 can be removed and replaced by a corresponding new filter cassette 60.

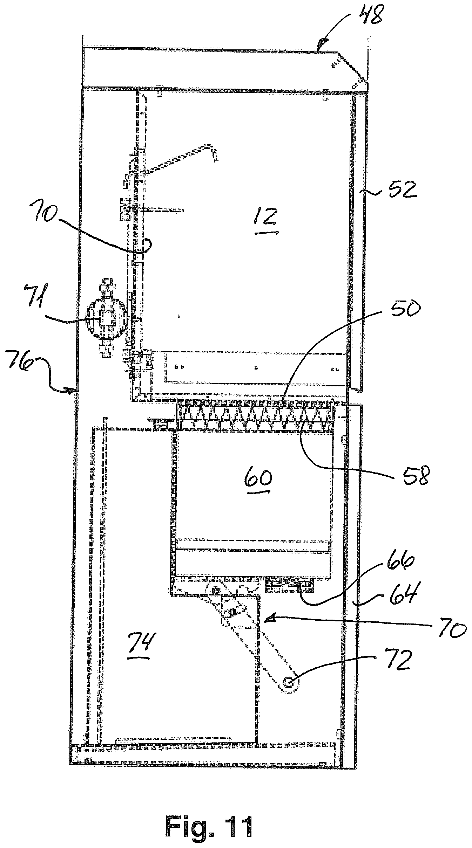

In Fig. 11, the filter cassette 60 is shown in its lower position where there is clear spacing between the filter cassette 60 and the bottom plate 50, while the filter cassette 60 in Fig. 13 is shown in its upper operational situation where the filter cassette 60 is disposed rather close under bottom plate 50.

With the object of protecting or facilitating cleaning the inner walls and the bottom plate 50 of the spraying cubicle 12, advantageously there may be applied an internal covering of a recticulated polyurethane foam with a PPI (pore per inch) of about 70-80, by way of example of the type Regicell 80 HIFI Black which has a density of about 30 kg/m³.

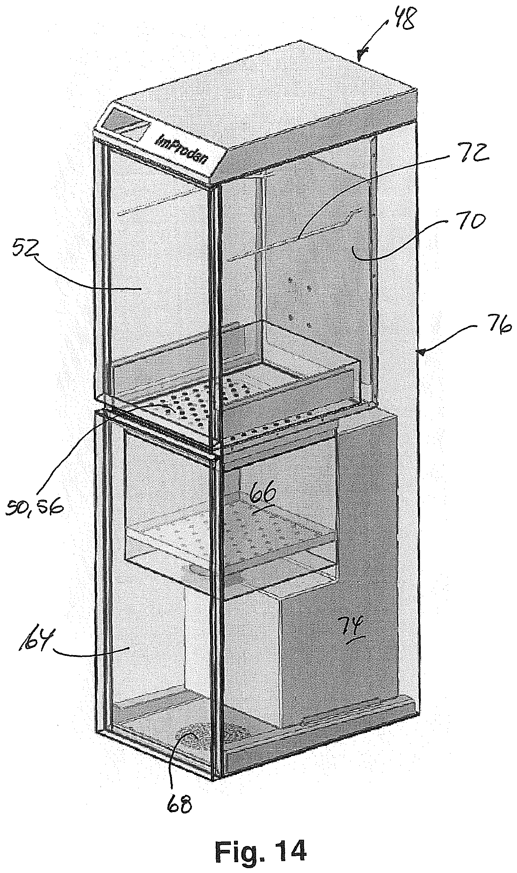

Said covering of the bottom plate 50 only influence the air penetration of the perforated bottom plate 50 (Fig. 14) to a very small degree. Under normal operational conditions, the said internal covering is to be replaced more often than the filter cassette 60, by way of example for about every 2,000 impregnation treatments.

In a prototype version of the apparatus 48 according to the invention, the filter cassette 60 was made of MDF-board. By future filter cassettes 60, the cassette itself is made of a considerably lighter material, by way of example fibre cardboard. In that connection it is important to note that used filter cassettes 60 are completely harmless and may be disposed of together with refuse collection.

The applied impregnating liquid is particularly developed for impregnating shoes, gloves, clothing etc. The impregnating liquid is quick-drying and hardens in the course of about 90 seconds at 20° C. The impregnating liquid does not cause discolouration, spots or blotches. The impregnation liquid secures the fabric against bleaching by sunlight, attacks by fungus, mildew and fungus mould. The impregnation liquid can be used on oiled clothing of nylon/rayon and make it completely tight.

By the preferred embodiment of an apparatus 48 according to the invention shown in Figs. 10-14, the apparatus is provided with a jacket 76 of stainless steel sheeting which in one piece constitutes the outer rear and side walls, implying that in the situation of use there is only access to the interior of the apparatus through the upper and lower front doors 52, 64.

One or more storage containers for impregnating liquid is disposed in a lower L-shaped box 74 behind and under the filter cassette 60, while a pump 71 and diverse supply connections are disposed behind a stationary rear sheet 70 of the spraying cubicle 12 from where respective atomising nozzles 72 protrude into the spraying cubicle 12.

The processing time is about 25 s in total, of which the treatment itself takes 2 x 350 ms while about 20 s are used for drying the treated item. The used ventilator 66 has a capacity of about 100 m³/h and the exhaust from the spraying cubicle occurs with an air exchange of 1.5 s⁻¹. The interval between treatments is about 4 s.

The specific arrangement of the spraying cubicle 12 may vary according to need, depending on the actual items to be impregnated by means of the apparatus 2, 32, 48.

For example, the spraying cubicle 12 may be equipped with a number of atomising nozzles that have a mutually fixed disposition, or the mutual disposition of which may be varied. Another possibility would be to equip the spraying cubicle 12 with a number of movable atomising nozzles if the actual pattern of movement is determined by the actual shape and size of the actual item to be impregnated.

As also indicated the spraying cubicle 12 may be equipped with devices or aiding means for suspending or in other ways reinforcing items that either cannot stand by them selves or which have great height, by way of example high boots.

It is expected that a very significant future application of the method and apparatus according to the invention will consist of impregnating treatment of clothing, particularly hunting clothes, leisure clothing, ski clothing, children's clothing, including snowsuits for children.

In the performing of the present invention, additional future areas of business are expected, such as aseptic treatment of bowling shoes (shoes for rent or lending) and aseptic treatment of summer footwear, in particular sandals.

The present project is intended or planned commercially such that the method and apparatus according to the invention are primarily intended for use in specialty stores for footwear and leather items, where apparatuses are set up according to a cooperation agreement (franchise) and serviced by a firm that owns and sets up the apparatuses (impregnation machines). In other words, the individual user or business preferably pays a fixed fee determined by a certain number of treatments and possibly by the type of treatment, as it is presumably to be more expensive to treat a pair of high boots than a pair of shoes.

Therefore the apparatus has an external counter or a display which is read in connection with payment, and which according to prior art by way of example can be remotely read. Alternatively, the apparatus can be adapted to communicate with a service firm via SMS or other wireless communication with the object of remotely controlled reading.

In the future, when buying footwear or other leather items that normally are to be impregnated afterwards, it should be a standard situation that the shop assistant in connection with a purchase is asking, "should I impregnate the shoes?", "should I impregnate the boots" or "should I impregnate the bag?"

Finally, it is to be mentioned that an impregnating apparatus as indicated and described within the scope of the invention may be found in a slot-machine version which is intended for setup in hotels, shopping centres, train and bus stations or other public localities.

## Claims

1. A method for impregnating of footwear, bags, gloves, other leather items or leather-like items by a surface treatment comprising the following method steps:
- possible covering a surface or a part of items not to be treated;
- possible selecting a time period of which can be fixedly preselected or adjustable for operation of a spraying unit;
- placing items to be treated in a cubicle (12);
- shutting said cubicle and thereby manually or automatically initiating the following further method steps;
- activating said spraying unit for forming a mist of impregnating agent inside said cubicle for applying impregnating agent onto the surfaces of the items;
- activating an air pump, ventilator or similar means integrated in the bottom of the cabinet will automatically start with the object of establishing a vacuum in the spraying cubicle - retaining excess impregnating agent in a filter (60), preferably a filter containing activated carbon.

2. Method according to claim 1, including the following further process step:
- selecting an impregnating agent;
- adjusting nozzles of said spraying unit in dependence of size and shape of actual items;

3. Method according to claim 1, including the following further process step:
- suspending items to be impregnated which cannot stand by themselves in said cubicle (12).

4. Method according to claim 1, including the following further process step:
- supporting items with large height, such as boots, in upright position, by way of example, by means of internal supports in the bootlegs.

5. An apparatus (2, 32, 48) for impregnating items according to the method of claim 1, comprising a closed cubicle (12), one or more storage containers for specific impregnating agents, said storage containers being connected with an electric pump (71) via a valve system comprising one or more valves, **characterised in that** said pump (71) being connected with one or more atomising nozzles (72) in said cubicle (12), an electronic control with associated keyboard which is accessible from a front side of the apparatus, said control being adapted to activate said pump (71) and said valve system for connecting it with a storage container containing a specific impregnating agent, a filter (60) and an air pump, ventilator (66) or corresponding means provided and adapted to establish a vacuum in said cubicle (12) for removal of residual impregnating agent from said cubicle (12) and to retain the residue in said filter (60).

6. Apparatus (2, 32, 48) according to claim 5, **characterised in that** said electronic control being associated with display means (18) accessible from a front side of the apparatus (2, 32, 48).

7. Apparatus (48) according to claim 5, **characterised in** comprising a scanner, a camera or other means adapted to determine the shape and/or size of items disposed in the cubicle (12) and which, coordinated by said electronic control, are adapted to activate specific atomising nozzles.

8. Apparatus (48) according to claim 5, **characterised in** comprising means adapted to support elongated items, by way of example high boots, upright or hanging in the cubicle.

9. Apparatus (2) according to claim 5, **characterised in** comprising a drawer (8) arranged under said cubicle (12), the drawer being preferably accessible from the front side of the apparatus (2) and containing said filter and possibly also said storage containers for impregnating agent.

10. Apparatus (2) according to claim 5, **characterised in that** said cubicle includes a sliding door (6) arranged for opening by upward displacement and which includes a preferably electric actuating mechanism.

## Patentansprüche

1. Verfahren zum Imprägnieren von Schuhen, Taschen, Handschuhen, anderen Ledergegenständen oder lederähnlichen Gegenständen durch eine Oberflächenbehandlung, umfassend die folgenden Verfahrensschritte:
- mögliches Abdecken einer Oberfläche oder eines Teils von nicht zu behandelnden Gegenständen;
- mögliches Auswählen eines Zeitraums, der für den Betrieb einer Sprüheinheit fest vorwählbar oder einstellbar ist;
- Platzieren von zu behandelnden Gegenständen in einer Kabine (12);
- Schließen der Kabine und dadurch manuelles oder automatisches Einleiten der folgenden weiteren Verfahrensschritte;
- Aktivieren der Sprüheinheit zum Bilden eines Imprägniermittelnebels innerhalb der Kabine zum Aufbringen von Imprägniermittel auf die Oberflächen der Gegenstände;
- Anschalten einer Luftpumpe, eines Ventilators oder eines ähnlichen Mittels, die/der/das in dem Boden des Schranks integriert ist, beginnt die Aufgabe, einen Unterdruck in der Sprühkabine herzustellen, automatisch; Zurückhalten von überschüssigem Imprägniermittel in einem Filter (60), vorzugsweise einem Filter, der Aktivkohle enthält.

2. Verfahren nach Anspruch 1, beinhaltend den folgenden weiteren Verfahrensschritt:
- Auswählen eines Imprägniermittels;
- Einstellen von Düsen der Sprüheinheit in Abhängigkeit von Größe und Form der tatsächlichen Gegenstände;

3. Verfahren nach Anspruch 1, beinhaltend den folgenden weiteren Verfahrensschritt:
- Aufhängen von zu imprägnierenden Gegenständen, die nicht selbst stehen können, in der Kabine (12).

4. Verfahren nach Anspruch 1, beinhaltend den folgenden weiteren Verfahrensschritt:
- Tragen von Gegenständen mit großer Höhe, wie etwa Stiefel, in aufrechter Position, beispielsweise mittels innerer Stützen in den Stiefelfüßen.

5. Vorrichtung (2, 32, 48) zum Imprägnieren von Gegenständen nach dem Verfahren nach Anspruch 1, umfassend eine geschlossene Kabine (12), einen oder mehrere Speicherbehälter für spezifische Imprägniermittel, wobei die Speicherbehälter über ein Ventilsystem, das ein oder mehrere Ventile umfasst, mit einer elektrischen Pumpe (71) verbunden sind, **dadurch gekennzeichnet, dass** die Pumpe (71) mit einer oder mehreren Zerstäubungsdüsen (72) in der Kabine (12) verbunden ist, eine elektronische Steuerung mit zugehöriger Tastatur, die von einer Vorderseite der Vorrichtung zugänglich ist, wobei die Steuerung dazu ausgelegt ist, die Pumpe (71) und das Ventilsystem zum Verbinden mit einem Speicherbehälter, der ein spezifisches Imprägniermittel enthält, anzuschalten, ein Filter (60) und eine Luftpumpe, einen Ventilator (66) oder entsprechende Mittel, die dazu vorgesehen und ausgelegt sind, einen Unterdruck in der Kabine (12) zur Entfernung von restlichem Imprägniermittel aus der Kabine (12) herzustellen und den Rückstand in dem Filter (60) zurückzuhalten.

6. Vorrichtung (2, 32, 48) nach Anspruch 5, **dadurch gekennzeichnet, dass** die elektronische Steuerung Anzeigemitteln (18) zugeordnet ist, die von einer Vorderseite der Vorrichtung (2, 32, 48) zugänglich sind.

7. Vorrichtung (48) nach Anspruch 5, **dadurch gekennzeichnet, dass** sie einen Scanner, eine Kamera oder andere Mittel umfasst, die dazu ausgelegt sind, die Form und/oder Größe von Gegenständen zu bestimmen, die in der Kabine (12) angeordnet sind, und die, durch die elektronische Steuerung koordiniert, dazu ausgelegt sind, spezifische Zerstäubungsdüsen anzuschalten.

8. Vorrichtung (48) nach Anspruch 5, **dadurch gekennzeichnet, dass** sie Mittel umfasst, die dazu ausgelegt sind, längliche Gegenstände, beispielsweise hohe Stiefel, aufrecht oder hängend in der Kabine zu tragen.

9. Vorrichtung (2) nach Anspruch 5, **dadurch gekennzeichnet, dass** sie eine Schublade (8) umfasst, die unter der Kabine (12) angeordnet ist, wobei die Schublade vorzugsweise von der Vorderseite der Vorrichtung (2) zugänglich ist und das Filter und gegebenenfalls auch die Speicherbehälter für Imprägniermittel enthält.

10. Vorrichtung (2) nach Anspruch 5, **dadurch gekennzeichnet, dass** die Kabine eine Schiebetür (6) beinhaltet, die zum Öffnen durch Aufwärtsbewegung angeordnet ist und die einen vorzugsweise elektrischen Betätigungsmechanismus beinhaltet.

## Revendications

1. Procédé destiné à imprégner des chaussures, des sacs, des gants, d'autres articles en cuir ou analogues par un traitement de surface comprenant les étapes de procédé de :
- recouvrement éventuel d'une surface ou d'une partie d'articles à ne pas traiter ;
- sélection éventuelle d'une période de temps pouvant être présélectionnée ou réglable de manière fixe pour le fonctionnement d'une unité de pulvérisation ;
- placement d'articles à traiter dans une cabine (12) ;
- fermeture de ladite cabine et ainsi le déclenchement manuel ou automatique des étapes de procédé ;
- d'activation de ladite unité de pulvérisation pour former un brouillard d'agent d'imprégnation à l'intérieur de ladite cabine pour appliquer l'agent d'imprégnation sur les surfaces des articles ;
- d'activation d'une pompe à air, d'un ventilateur ou d'un moyen similaire intégré dans le fond de l'armoire commencera automatiquement avec l'objectif d'établir un vide dans la cabine de pulvérisation conservant l'agent d'imprégnation excédentaire dans un filtre (60), de préférence un filtre contenant du charbon actif.

2. Procédé selon la revendication 1, comprenant l'étape supplémentaire de :
- sélection d'un agent d'imprégnation ;
- réglage des buses de ladite unité de pulvérisation en fonction de la taille et de la forme des articles réels ;

3. Procédé selon la revendication 1, comprenant l'étape supplémentaire de :
- suspension d'articles à imprégner qui ne peuvent pas tenir seuls dans ladite cabine (12).

4. Procédé selon la revendication 1, comprenant l'étape supplémentaire de :
- support d'articles de grande hauteur, tels que des bottes, en position verticale, par exemple au moyen de supports internes dans les pieds de bottes.

5. Appareil (2, 32, 48) destiné à imprégner des articles selon le procédé selon la revendication 1, comprenant une cabine fermée (12), un ou plusieurs réservoirs de stockage d'agents d'imprégnation spécifiques, lesdits réservoirs de stockage étant reliés à une pompe électrique (71) par le biais d'un système de vannes comprenant une ou plusieurs vannes, **caractérisé en ce que** ladite pompe (71) étant reliée à une ou plusieurs buses de pulvérisation (72) dans ladite cabine (12), une commande électronique à clavier associé qui est accessible depuis une face avant de l'appareil, ladite commande étant adaptée pour activer ladite pompe (71) et ledit système de vanne pour la relier à un récipient de stockage contenant un agent d'imprégnation spécifique, un filtre (60) et une pompe à air, un ventilateur (66) ou des moyens correspondants prévus et adaptés pour établir un vide dans ladite cabine (12) pour l'élimination de l'agent d'imprégnation résiduel de ladite cabine (12) et pour retenir le résidu dans ledit filtre (60).

6. Appareil (2, 32, 48) selon la revendication 5, **caractérisé en ce que** ladite commande électronique est associée à des moyens d'affichage (18) accessibles depuis une face avant de l'appareil (2, 32, 48).

7. Appareil (48) selon la revendication 5, **caractérisé en ce qu'**il comprend un scanner, une caméra ou d'autres moyens adaptés pour déterminer la forme et/ou la taille des articles disposés dans la cabine (12) et qui, coordonnés par ladite commande électronique, sont adaptés pour activer des buses d'atomisation spécifiques.

8. Appareil (48) selon la revendication 5, **caractérisé en ce qu'**il comprend des moyens adaptés pour supporter des articles allongés, par exemple des bottes hautes, verticales ou suspendues dans la cabine.

9. Appareil (2) selon la revendication 5, **caractérisé en ce qu'**il comprend un tiroir (8) agencé sous ladite cabine (12), le tiroir étant de préférence accessible depuis la face avant de l'appareil (2) et contenant ledit filtre et éventuellement également lesdits réservoirs d'agent d'imprégnation.

10. Appareil (2) selon la revendication 5, **caractérisé en ce que** ladite cabine comprend une porte coulissante (6) agencée pour s'ouvrir par déplacement vers le haut et qui comprend de préférence, un mécanisme d'actionnement électrique.
